Europäisches Patentamt

European Patent Office

Office européen des brevets

(11) Veröffentlichungsnummer: **0 004 038**
**B2**

(19)

(12) # NEUE EUROPÄISCHE PATENTSCHRIFT

(45) Veröffentlichungstag der neuen Patentschrift:
**14.08.85**

(21) Anmeldenummer: **79100612.5**

(22) Anmeldetag: **02.03.79**

(51) Int. Cl.⁴: **D 06 F 75/18,** F 16 K 29/00

(54) **Dampfbügeleisen.**

(30) Priorität: **14.03.78 DE 2810954**

(43) Veröffentlichungstag der Anmeldung:
**19.09.79 Patentblatt 79/19**

(45) Bekanntmachung des Hinweises auf die Patenterteilung:
**05.08.81 Patentblatt 81/31**

(45) Bekanntmachung des Hinweises auf die Entscheidung
über den Einspruch:
**14.08.85 Patentblatt 85/33**

(84) Benannte Vertragsstaaten:
**FR GB IT NL**

(56) Entgegenhaltungen:
**DE - A - 1 585 794
DE - A - 1 931 847
DE - A - 1 931 848
DE - A - 2 534 701
DE - B - 1 931 847
GB - A - 215 515
GB - A - 682 970
US - A - 2 749 633
US - A - 2 963 803
US - A - 3 165 843
US - A - 3 889 406
US - A - 4 070 773**

(73) Patentinhaber: **Licentia Patent-Verwaltungs-GmbH,
Theodor-Stern-Kai 1, D-6000 Frankfurt/Main 70 (DE)**

(72) Erfinder: **Sanneck, Hugo, Dr., Eichenwaldstrasse 19,
D-8502 Zirndorf (DE)**
Erfinder: **Nauta, Wilhelm, Virchowstrasse 50,
D-8500 Nürnberg (DE)**
Erfinder: **Rader, Armin, Dachsbacherstrasse 6,
D-8500 Nürnberg (DE)**

(74) Vertreter: **Vogl, Leo, Dipl.-Ing., Licentia
Patent-Verwaltungs-G.m.b.H. Theodor-Stern-Kai 1,
D-6000 Frankfurt 70 (DE)**

EP 0 004 038 B2

ACTORUM AG

## Beschreibung

Die Erfindung betrifft ein Dampfbügeleisen mit einem Wassertank und einer eine Dampferzeugungungskammer aufweisenden beheizten Sohlenplatte sowie einem mit einer in einem Ventilkörper angeordneten Düsenbohrung zusammenwirkenden, in dem Wassertank befindlichen Wasserabsperrventil, durch das der Wasserfluss in die Dampferzeugungskammer freigebbar oder absperrbar ist, wobei mit dem Wasserabsperrventil eine durch eine Düsenbohrung hindurchgeführte Reinigungsnadel zur Beseitigung der im Bereich der Düsenbohrung sich ansammelnden Ablagerungen gekoppelt ist.

Es ist allgemein bekannt, dass bei Verwendung von Leitungswasser zur Dampferzeugung in Dampfbügeleisen die grosse Gefahr besteht, dass die Wasserdurchlässe mit der Zeit durch Ablagerungen verstopft werden. Zur Reinigung bzw. Ausräumung der sich vor allem im Bereich der Düsenbohrung ansammelnden Ablagerungen ist es bekannt, eine Reinigungsnadel durch die den Wasserfluss zur Dampferzeugungskammer dosierende Düsenbohrung zu stossen. Ein mit einer solchen Reinigungsnadel arbeitendes Dampfbügeleisen ist z.B. Gegenstand der DE-B 1 931 847. Bei diesem Dampfbügeleisen ist das die Düsenbohrung beherrschende Wasserabsperrventil als Kolben ausgebildet. Innerhalb des Kolbens ist die an einer Schubstange gehalterte Reinigungsnadel geführt, die nach dem Aufsitzen des Kolbens auf der Düsenbohrung durch die Relativbewegung des Kolbens bezüglich der Schubstange eingeführt wird und diese bei Betätigen des Wasserabsperrventils von Ablagerungen freihalten soll. Die Reinigungswirkung der Reinigungsnadel ist hier jedoch nur bei Betätigen des Wasserabsperrventils wirksam. Des weiteren wird die Düsenbohrung aufgrund der senkrechten Führung der Reinigungsnadel nur entsprechend dem Durchmesser der Reinigungsnadel von Ablagerungen freigehalten. Es ist dabei nun nicht zu verhindern, dass sich am Wandungsbereich der Düsenbohrung im Laufe der Zeit trotzdem Ablagerungen bilden und damit den Wasserfluss durch die Düsenbohrung verringern.

Aus der DE-A 1 931 848 ist weiterhin ein Dampfbügeleisen bekannt, welches einen Wassertank, eine Sohlenplatte mit darin angeordneter Verdampfermulde sowie ein mit einer Düsenöffnung zusammenwirkendes Wasserventil aufweist. Das Wasserventil trägt einen pendelartig gehalterten Stössel, der ständig durch die Düsenöffnung hindurchragt und der in zwei Abschnitte mit ungleichen Durchmessern aufgeteilt ist. Wird der Stössel in seine Ventil-Absperrstellung gebracht, so erfolgt dabei ein Ausschaben der Düsenöffnung durch den stärkeren Abschnitt des Stössels. Ein Dampfbügeleisen gleicher Art ist ausserdem aus der US-PS 4 070 773 bekannt. Bei diesen beiden bekannten Dampfbügeleisen erfolgt ein Ausschaben und damit Reinigen der Düsenöffnung von dort abgesetzten Ablagerungen aus dem verwendeten Leitungswasser ausschliesslich durch die vertikale Schliessbewegung des Stössels. Hierzu ist aber eine manuelle Betätigung des Stössels erforderlich. Ein Reinigen der Düsenöffnung findet bei dem bekannten Dampfbügeleisen in der Regel aber nur nach Beendigung bzw. Abschluss einer Bügelperiode statt, wenn die Düsenöffnung versperrt wird. Erstreckt sich eine solche Bügelperiode jedoch über einen längeren Zeitraum, so besteht hier die Gefahr, dass bei Verwendung von sehr hartem Leitungswasser bereits während der Bügelperiode die Düsenöffnung durch Ablagerungen eingeengt und der Wasserdurchfluss zur Verdampfermulde behindert wird.

Hier will die Erfindung Abhilfe schaffen. Die Erfindung, wie sie in den Ansprüchen gekennzeichnet ist, löst die Aufgabe, ein Dampfbügeleisen der eingangs genannten Art so weiterzuverbessern, dass der Querschnitt der Düsenbohrung ohne manuelle Einwirkung auch während einer vollen Bügelperiode erhalten bleibt und damit auch während einer längeren Betriebsdauer immer eine gleichmässige Wasserdurchflussmenge durch die Düsenbohrung gewährleistet ist.

Durch die vorgeschlagene Ausbildung der Reinigungsnadel wird in vorteilhafter Weise erreicht, dass diese nicht nur durch die bei Betätigen des Wasserabsperrventils übliche senkrechte, sondern während des gesamten Bügelvorganges zusätzlich auch bei jeder Bügelbewegung automatisch eine nach allen Seiten hin gerichtete pendelnde Schwingung in der Horizontalen ausführt. Auf diese Weise wird die Düsenbohrung in ihrem gesamten Wandungsbereich ständig automatisch mechanisch beaufschlagt und damit die Bildung von Ablagerungen in diesem Bereich äusserst zuverlässig verhindert.

Ein Ausführungsbeispiel der Erfindung ist anhand mehrerer Figuren in der Zeichnung dargestellt und wird nachfolgend näher beschrieben.

Die Figuren zeigen lediglich einen Teilausschnitt aus einem Dampfbügeleisen, und zwar nur den vom Wasserabsperrventil beherrschten Bereich der den Wasserzufluss zur Dampferzeugungskammer dosierenden Düsenbohrung.

Die Sohlenplatte 1 für ein Dampfbügeleisen enthält eine übliche Dampferzeugungskammer 2, der über eine Düsenbohrung 3 eines Ventilkörpers 4 Wasser in genau dosierten Mengen zuführbar ist. Die Düsenbohrung 3 läuft in eine nach oben sich öffnende kegelförmige Ausnehmung 5 aus, die zum Einführen eines die Abdichtung der Düsenbohrung bewirkenden kolbenartigen Wasserabsperrventils 6 dient. Nach unten zu öffnet sich die Düsenbohrung 3 zylindrisch. Daran schliesst sich ein oberhalb der Dampferzeugungskammer 2 endender Kanal 30 grösseren Querschnitts an. Mit dem unter dem Druck einer Feder 7 gehaltenen kolbenartigen Wasserabsperrventil 6 ist eine sogenannte Reinigungsnadel 8 gekoppelt, die so lang bemessen ist, dass sie durch die im Durchmesser grössere Düsenbohrung 3 hindurchgeführt ist und erst in der Dampferzeugungskammer 2 endet. Das in der Dampferzeugungskammer 2 befindliche freie Ende der Reinigungsnadel 8 trägt ein Pendelgewicht 9.

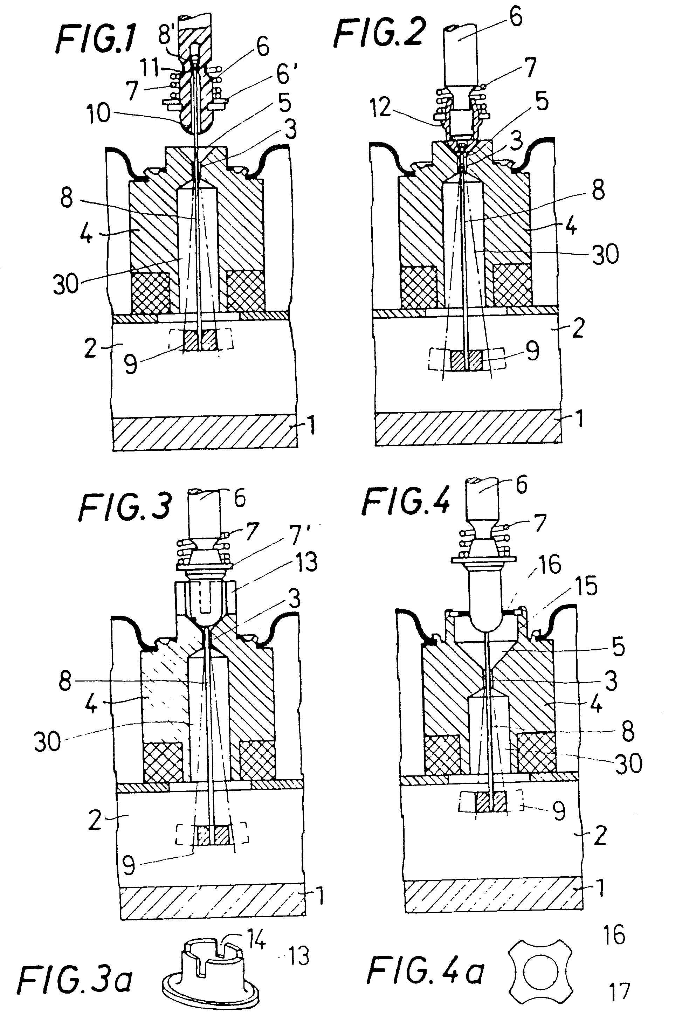

Wie aus der Fig. 1 hervorgeht, ist die Reinigungsnadel 8 mit ihrem Kegelkopf 8′ am Ende einer Längsbohrung 10 im kolbenartigen Wasserabsperrventil 6 hinter einer umlaufenden Verengung 11 gehalten. Da die Längsbohrung 10 gegenüber der Reinigungsnadel 8 im Durchmesser ebenfalls wesentlich grösser bemessen ist, ist ein Schwingen der Reinigungsnadel in der Längsbohrung nach allen Seiten gut möglich. Während des Bügelvorganges, bei dem das Bügeleisen laufend hin und her bewegt wird, wird die Reinigungsnadel 8 bedingt durch ihr in der Dampferzeugungskammer 2 frei hin und her schwingendes bzw. pendelndes Gewicht 9 ständig nach allen Seiten hin bewegt. Dabei wird insbesondere die Wandung der Düsenbohrung 3 am gesamten Umfang laufend mechanisch beaufschlagt, so dass sich dort keine die Düsenbohrung verengenden Ablagerungen mehr bilden können.

Gemäss Fig. 2 ist die pendelartige Reinigungsnadel 8 mit ihrem Kegelkopf 8′ in einer auf dem kolbenartigen Wasserabsperrventil 6 befestigten Kappe 12 eingehängt.

Um auf dem Wege zum Abdichten bzw. Verschliessen der Düsenbohrung 3 im Ventilkörper 4 eine sichere Führung für das kolbenartige Wasserabsperrventil 6 zu gewährleisten, ist nach Fig. 3 oberhalb der kegelförmigen Ausnehmung 5 im Ventilkörper 4 ein diese nach oben zu verlängernder Ansatz 14 angebracht. Der Ansatz 13 weist nach oben offene Schlitze 14 zum Führen des Feder-Trägers 7′ auf.

Nach Fig. 4 ist die kegelförmige Ausnehmung 5 im Ventilkörper 4 nach oben zu mit einer angeformten Verlängerung 15 versehen, in der eine scheibenartige Führungsplatte 16 mit einer zentrischen Bohrung 17 für das entsprechend ausgebildete kolbenartige Wasserabsperrventil 6 eingeklemmt ist.

## Patentansprüche

1. Dampfbügeleisen mit einem Wassertank und einer eine Dampferzeugungskammer (2) aufweisenden beheizten Sohlenplatte (1) sowie einem mit einer in einem Ventilkörper (4) angeordneten Düsenbohrung (3) zusammenwirkenden, in dem Wassertank befindlichen Wasserabsperrventil (6), durch das der Wasserfluss in die Dampferzeugungskammer (2) freigebbar oder absperrbar ist, wobei mit dem Wasserabsperrventil (6) eine durch die Düsenbohrung (3) hindurchgeführte Reinigungsnadel (8) zur Beseitigung der im Bereich der Düsenbohrung (3) sich ansammelnden Ablagerungen gekoppelt ist, dadurch gekennzeichnet, dass die Reinigungsnadel (8) als Pendelnadel ausgebildet ist und in der Dampferzeugungskammer (2) frei endet, wobei das dort befindliche freie Ende der Reinigungsnadel (8) mit einem Pendelgewicht (9) versehen ist.

2. Dampfbügeleisen nach Anspruch 1, dadurch gekennzeichnet, dass die Reinigungsnadel (8) einen Kegelkopf (8′) aufweist, welcher am Ende einer Längsbohrung (10) im kolbenartigen Wasserabsperrventil (6) hinter einer dort umlaufenden Verengung (11) gehalten ist.

3. Dampfbügeleisen nach Anspruch 2, dadurch gekennzeichnet, dass die Längsbohrung (10) und die bei geschlossenem Wasserabsperrventil (6) sich daran anschliessende Düsenbohrung (3) einen grösseren Durchmesser aufweisen als die Reinigungsnadel (8).

4. Dampfbügeleisen nach Anspruch 1, dadurch gekennzeichnet, dass die pendelartige Reinigungsnadel (8) mit ihrem Kegelkopf (8′) in einer auf dem kolbenartigen Wasserabsperrventil (6) befestigten Kappe (12) eingehängt ist.

5. Dampfbügeleisen nach Anspruch 1, dadurch gekennzeichnet, dass zur Führung für das kolbenartige Wasserabsperrventil (6) oberhalb der Düsenbohrung (3) am Ventilkörper (4) ein dieses verlängernder Ansatz (13) vorgesehen ist.

6. Dampfbügeleisen nach Anspruch 5, dadurch gekennzeichnet, dass der Ansatz (13) nach oben offene Schlitze (14) aufweist.

7. Dampfbügeleisen nach Anspruch 1, dadurch gekennzeichnet, dass oberhalb der Düsenbohrung (3) eine scheibenartige Führungsplatte (16) mit einer Bohrung (17) zur Führung des kolbenartigen Wasserabsperrventils (6) angebracht ist.

## Claims

1. Steam smoothing iron with a water tank and a heated sole plate (1) comprising a steam generating chamber (2) as well as a water stop valve (6), which is disposed in the water tank, cooperates with a nozzle bore (3) arranged in a valve body (4) and through which the water flow into the steam generating chamber (2) is freeable or blockable, wherein a cleaning needle (8), led through the nozzle bore (3) and for the removal of the deposits collecting in the region of the nozzle bore (3), is coupled with the water stop valve (6), characterised in that the cleaning needle (8) is formed as a pendulum needle and ends freely in the steam generating chamber (2), the free end of the cleaning needle (8) disposed there being provided with a pendulum weight (9).

2. Steam smoothing iron according to claim 1, characterised thereby, that the cleaning needle (8) displays a conical head (8′), which is held at the end of a longitudinal bore (10) in the pistonlike water stop valve (6) behind a constriction (11) encircling there.

3. Steam smoothing iron according to claim 2, characterised thereby, that the longitudinal bore (10) and the nozzle bore (3), adjoining thereat when the water stop valve (6) is closed, display a greater diameter than the cleaning needle (8) .

4. Steam smoothing iron according to claim 1, characterised thereby, that the pendulumlike cleaning needle (8) is hooked by its conical head (8′) into a cap (12) fastened to the pistonlike water stop valve (6).

5. Steam smoothing iron according to claim 1, characterised thereby, that a projection (13) is provided above the nozzle bore (3) on the valve body (4) prolonging this for the guidance of the pistonlike water stop valve (6).

6. Steam smoothing iron according to claim 5, characterised thereby, that the projection (13) displays upwardly open slots (14).

7. Steam smoothing iron according to claim 1, characterised thereby, that a disclike guide plate (16) with a bore (17) is mounted above the nozzle bore (3) for the guidance of the pistonlike water stop valve (6).

**Revendications**

1. Fer à repasser à vapeur comportant un réservoir d'eau et une plaque chauffée (1) formant semelle et contenant une chambre (2) productrice de vapeur ainsi qu'une soupape d'arrêt d'eau (6) placée dans le réservoir d'eau et coopérant avec un alésage de buse (3) prévu dans un corps de soupape (4) de façon à commander l'admission d'eau dans la chambre productrice de vapeur (2), une aiguille de nettoyage (8) traversant l'alésage (3) de la buse étant accouplée à la soupape d'arrêt d'eau pour l'élimination des dépôts s'accumulant dans la zone de l'alésage (3), caractérisé en ce que l'aiguille de nettoyage (8) est une aiguille formant pendule qui se termine librement dans la chambre productrice de vapeur (2), l'extrémité libre de l'aiguille de nettoyage (8) qui se trouve dans cette chambre étant munie d'un poids à pendule (9).

2. Fer à repasser à vapeur suivant la revendication 1, caractérisé en ce que l'aiguille de nettoyage (8) présente une tête conique (8') qui est maintenue derrière un rétrécissement circulaire (11) prévu à l'extrémité d'un alésage longitudinal (10) pratiqué à l'intérieur de la soupape d'arrêt d'eau (6) en forme de piston.

3. Fer à repasser à vapeur suivant la revendication 2, caractérisé en ce que l'alésage longitudinal (10) et l'alésage (3) faisant suite au premier lorsque la soupape d'arrêt (6) est fermée présentent un diamètre qui est supérieur à celui de l'aiguille de nettoyage (8).

4. Fer à repasser à vapeur suivant la revendication 1, caractérisé en ce que l'aiguille (8') en forme de pendule est accrochée par sa tête conique (8') à l'intérieur d'un capuchon (12) fixé sur la soupape d'arrêt (6) en forme de piston.

5. Fer à repasser à vapeur suivant la revendication 1, caractérisé en ce qu'une partie surélevée (13) est prévue sur le corps de soupape (4) et au-dessus de l'alésage (3) de la buse pour le guidage de la soupape d'arrêt (6) en forme de piston.

6. Fer à repasser à vapeur suivant la revendication 5, caractérisé en ce que la partie surélevée (13) présente des fentes (14) ouvertes vers le haut.

7. Fer à repasser à vapeur suivant la revendication 1, caractérisé en ce qu'une plaque (16) de forme circulaire, et présentant un alésage (17) pour guider la soupape d'arrêt (6) en forme de piston, est prévue au-dessus de l'alésage (3) de la buse.

FIG.1

FIG.2

FIG.3

FIG.4

FIG.3a

FIG.4a